(19) Europäisches Patentamt

European Patent Office

Office européen des brevets

(11) **EP 2 154 202 B1**

(12) **EUROPEAN PATENT SPECIFICATION**

(45) Date of publication and mention of the grant of the patent:
**27.06.2012 Bulletin 2012/26**

(21) Application number: **09165197.6**

(22) Date of filing: **10.07.2009**

(51) Int Cl.:
*C08L 77/00* (2006.01)    *B60C 1/00* (2006.01)
*C08K 3/34* (2006.01)    *C08K 5/00* (2006.01)
*C08K 5/43* (2006.01)    *C08L 51/06* (2006.01)
*C08K 5/435* (2006.01)    *C08L 79/02* (2006.01)

(54) **Thermoplastic Elastomer Composition and Pneumatic Tire Using the Same**

Thermoplastische Elastomerzusammensetzung und Luftreifen, der diese Zusammensetzung einsetzt

Composition d'élastomère thermoplastique et pneu l'utilisant

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **06.08.2008 JP 2008203414**

(43) Date of publication of application:
**17.02.2010 Bulletin 2010/07**

(73) Proprietor: **THE YOKOHAMA RUBBER CO., LTD. Tokyo 105-8685 (JP)**

(72) Inventor: **Morooka, Naoyuki Kanagawa 254-8601 (JP)**

(74) Representative: **Vossius & Partner Siebertstrasse 4 81675 München (DE)**

(56) References cited:
**WO-A1-2008/088555    JP-A- 2000 160 024**

- **RAHMAN M ET AL: "The plasticizer market: an assessment of traditional plasticizers and research trends to meet new challenges", PROGRESS IN POLYMER SCIENCE, PERGAMON PRESS, OXFORD, GB, vol. 29, no. 12, 1 December 2004 (2004-12-01), pages 1223-1248, XP004638225, ISSN: 0079-6700, DOI: DOI: 10.1016/J.PROGPOLYMSCI.2004.10.001**

## EP 2 154 202 B1

**Description**

TECHNICAL FIELD

The present invention relates to a thermoplastic elastomer composition and to a pneumatic tire using the same, more particularly relates to a thermoplastic elastomer composition comprising an aliphatic polyamide resin in which an ethylene-based modifying polymer is dispersed and to a pneumatic tire using the same.

BACKGROUND ART

Conventionally, for the inner liners arranged as air barrier layers at the inner surfaces of tires so as to retain the tire inner pressure, rubber compositions using butyl rubber, halogenated butyl rubber, etc. as main ingredients have been used. However, a rubber composition mainly comprised of a butyl-based rubber is low in air barrier property, so if using that rubber composition for an inner liner, the thickness of the inner liner must be made 1 to 4 mm or so. The weight of the inner liner in the tire becomes approximately 5%. This obstructs the reduction of the weight of the tire for improving the fuel economy of an automobile.

There is known a thermoplastic elastomer composition superior in balance between air barrier property and flexibility comprising a matrix of a specific thermoplastic resin matrix in which a specific rubber elastomer ingredient is dispersed as a discontinuous phase (Japanese Unexamined Patent Publication No. 8-259741).

Further, there are also known the fact that by having a melt viscosity ($\eta_m$) of a thermoplastic resin ingredient and a melt viscosity ($\eta_d$) of a rubber elastomer ingredient in the thermoplastic elastomer composition and a difference in the solubility parameters of the elastomer ingredient and thermoplastic resin ingredient (ASP) satisfy a specific relation, a high elastomer ingredient ratio is achieved and thereby a thermoplastic elastomer composition much richer in flexibility and superior in gas barrier property is obtained and further a pneumatic tire using the same as a gas barrier layer (Japanese Unexamined Patent Publication No. 10-25375).

Further, there is also known a thermoplastic elastomer composition comprising a thermoplastic elastomer having a thermoplastic resin as a continuous phase and a rubber composition as a dispersed phase in which a barrier resin composition having a phase structure dispersed in a flat shape is introduced so that the gas barrier property is greatly improved and flexibility, oil resistance, cold resistance, and heat resistance are given (Japanese Unexamined Patent Publication No. 10-114840).

Further, there is also known a thermoplastic elastomer composition comprising an aliphatic polyamide resin modified by a layered silicate into which an acid anhydride modified ethylene-based modifying polymer is blended (Japanese Unexamined Patent Publication No. 2000-160024).

SUMMARY OF INVENTION

TECHNICAL PROBLEM

However, when blending an aliphatic polyamide resin modified by a layered silicate and an acid anhydride modified ethylene-based modifying polymer, the polyamide resin and the acid anhydride groups will react, so there was the problem that when filling an ethylene-based modifying polymer in a high rate, the fluidity during melting sharply dropped and the film formability greatly deteriorated.

The present invention has as its object to improve the low temperature durability (repeated fatigue resistance) of an aliphatic polyamide resin by providing a thermoplastic elastomer composition comprising an aliphatic polyamide resin matrix into which an ethylene-based modifying polymer superior in low temperature durability is dispersed and filled, which thermoplastic elastomer composition maintains fluidity even when filling a modifying polymer to a high rate, enables film formation, and is superior in low temperature durability.

SOLUTION TO PROBLEM

The present invention is a thermoplastic elastomer composition comprising a thermoplastic resin composition (A) and a modified ethylene-based modifying polymer (B) graft modified with an acid anhydride group, wherein the thermoplastic resin composition (A) comprises 60 to 90 percent by weight of a layered silicate modified aliphatic polyamide resin (A1) prepared by an interlayer polymerization method and 10 to 40 percent by weight of a hydrophobic plasticizer (A2) having a solubility parameter (SP value) of 10 to 12 $(cal/cm^2)^{1/2}$, the modified ethylene-based modifying polymer (B) is included in an amount of 70 to 120 parts by weight based on 100 parts by weight of the thermoplastic resin composition, and the modified ethylene-based modifying polymer (B) forms a dispersed particle phase.

In the present invention, the hydrophobic plasticizer (A2) is preferably a sulfonamide-based plasticizer.

Further, the layered silicate is preferably a sodium montmorillonite.

Further, the modified aliphatic polyamide resin (A1) is preferably modified by 0.5 to 5 percent by weight of layered silicate.

Further, the aliphatic polyamide resin composing the modified aliphatic polyamide resin (A1) is preferably at least one resin selected from the group consisting of nylon 6 and nylon 610, nylon 612, and nylon 6.66 containing 90 percent by mole or more of a ε-caprolactam derived ingredient.

Further, the modified ethylene-based modifying polymer (B) is preferably cross-linked by a multifunctional amine having at least two or more amino groups in a molecule.

Further, the modified ethylene-based modifying polymer (B) is preferably an ethylene-α-olefin copolymer and/or a copolymer of ethylene-unsaturated carboxylic acid or derivatives thereof.

The present invention is further a method of production of a thermoplastic elastomer composition, comprising the steps of melt blending 100 parts by weight of a thermoplastic resin composition (A) comprising 60 to 90 percent by weight of a layered silicate modified aliphatic polyamide resin (A1) prepared by an interlayer polymerization method and 40 to 10 percent by weight of a hydrophobic plasticizer (A2) having a solubility parameter (SP value) of 10 to 12 $(cal/cm^2)^{1/2}$ and 70 to 120 parts by weight of a modified ethylene-based modifying polymer (B) graft modified by an acid anhydride group at a temperatures not less than melting temperatures of the thermoplastic resin composition (A) and the modified ethylene-based modifying polymer (B), and then dynamically cross-linking the modified ethylene-based modifying polymer (B) by a multifunctional amine.

The present invention is further a pneumatic tire comprising a film composed of the thermoplastic elastomer composition as an inner liner.

ADVANTAGEOUS EFFECTS OF INVENTION

According to the present invention, by using as a polyamide resin (A1) a layered silicate modified polyamide resin, including in it a hydrophobic plasticizer (A2), and further blending in a modified ethylene-based modifying polymer (B), it becomes possible to dispersed the ingredient (B) in the matrix phase of the ingredients (A1) and (A2) as a dispersed phase and suppress a rise of the melt viscosity while increasing the filling amount of the dispersed phase and as a result it is possible to obtain a thermoplastic elastomer composition superior in gas barrier property, fatigue resistance, and melt processability.

Further, a film comprised of the thermoplastic elastomer composition of the present invention may be used in a pneumatic tire as an inner liner.

BRIEF DESCRIPTION OF DRAWINGS

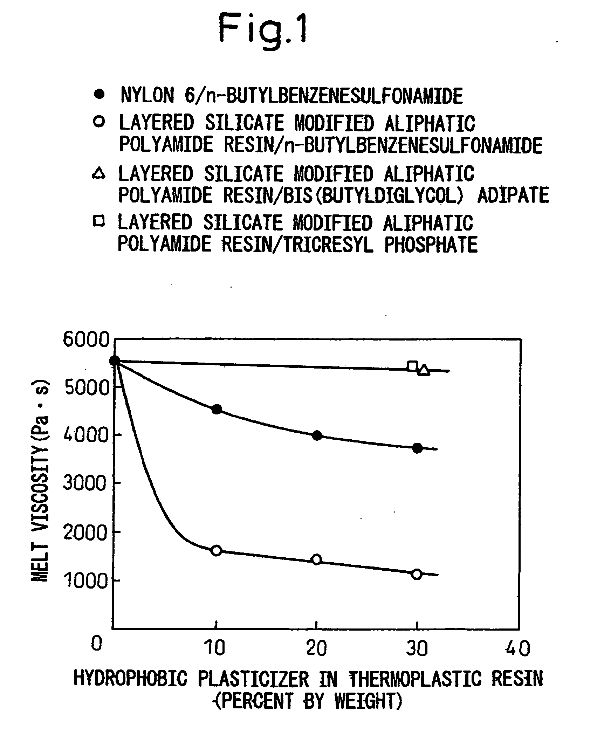

FIG. 1 shows the effects that the type and amount of hydrophobic plasticizer have on the melt viscosity of a thermoplastic elastomer composition.

DESCRIPTION OF EMBODIMENTS

The thermoplastic elastomer composition of the present invention comprises the thermoplastic resin composition (A) and the modified ethylene-based modifying polymer (B) graft modified by an acid anhydride group. The thermoplastic resin composition (A) comprises 60 to 90 percent by weight of a layered silicate modified aliphatic polyamide resin (A1) prepared by an interlayer polymerization method and 40 to 10 percent by weight of a hydrophobic plasticizer (A2) having a solubility parameter (SP value) of 10 to 12 $(cal/cm^2)^{1/2}$.

The layered silicate modified aliphatic polyamide resin (A1) used in the present invention is an aliphatic polyamide resin modified with layered silicate by an interlayer polymerization method.

The aliphatic polyamide resin is not particularly limited, however, preferable, nylon 6, nylon 610, nylon 612, and nylon 6.66 may be used alone or in any mixtures. The nylon 610, nylon 612, and nylon 6.66 used preferably contain ε-caprolactam-derived ingredients in 90 percent by mole or more. Among these, nylon 6 is preferable from the viewpoint of the fatigue resistance.

The layered silicate used to modify the aliphatic polyamide resin is not particularly limited, however, preferably montmorillonite, beidellite, saponite, hectorite, and other smectites, kaolinite, halloysite, and other kaolinites, dioctahedral vermiculite, trioctahedral vermiculite, and other vermiculites, tainiolite, tetra silicic mica, muscovite, illite, sericite, phlogopite, biotyte, and other micas, etc. may be used, but among these, montmorillonite, which has a strong interaction force with the aliphatic polyamide resin, is preferable. In particular, a sodium (Na) montmorillonite is preferable.

The interlayer polymerization method modifying the aliphatic polyamide resin with layered silicate means a method of replacing metal ions in the layered silicate with a swelling agent (for example, ammonium salt of an ω-amino acid having the molecular formula $H_2N\text{-}(CH_2)_{n-1}COOH$), increasing the space between the layers, introducing a monomer or monomers into the space between the layers, and polymerizing the monomer or monomers. The content of the layered silicate inside the modified aliphatic polyamide resin (A1) is preferably 0.5 to 5 percent by weight, more preferably 1 to 3 percent by weight.

The layered silicate modified aliphatic polyamide resin (A1) is commercially available. For example, a modified aliphatic polyamide resin modified by 2 percent by weight of sodium montmorillonite can be obtained from Ube Industries, Ltd. under the name of nylon 6 "UBE Nylon" 1022C2.

The hydrophobic plasticizer (A2) used in the present invention is not particularly limited so long as the solubility parameter (SP value) calculated from Fedors formula is 10 to 12 $(cal\,/cm^2)^{1/2}$ , however, for example, an aromatic ester, aliphatic ester, phosphate ester, sulfonamide-based plasticizer, and any other known hydrophobic plasticizer may be used. In particular, a sulfonamide-based plasticizer (for example, butylbenzenesulfonamide, p-toluenesulfonamide, N-ethyl-p-toluenesulfonamide, N-cyclohexyl-p-toluenesulfonamide), etc. are preferably used from the viewpoint of compatibility with the polyamide resin used in the present invention.

The solubility parameter (SP value) is a value calculated from repeating units of the polymer at 25°C determined by the Fedors method. For the method, refer to R.F. Fedors, Polym. Eng. Sci., 14(2), 147 (1974). That is, it is determined by the following formula from the data of the evaporation energy and the molar volume of the atoms and groups of atoms in the structural formula of the compound whose solubility parameter is to be sought:

$$\textbf{Solubility parameter} = (\Sigma\Delta ei/\Sigma\Delta vi)^{1/2}$$

where, in the formula, Aei and Avi indicate the evaporation energy and the molar volume of atoms and groups of atoms respectively. The structural formula of the compound whose solubility parameter is to be sought is determined using IR, NMR, mass spectrometry, and other normal structural analysis methods.

The content of the layered silicate modified aliphatic polyamide resin (A1) in the thermoplastic resin composition (A) is 60 to 90 percent by weight, preferably 65 to 80 percent by weight. The content of the hydrophobic plasticizer (A2) inside the thermoplastic resin composition (A) is 10 to 40 percent by weight, preferably 20 to 35 percent by weight. If the content of the hydrophobic plasticizer (C) is small, the reaction between the acid anhydride groups of the modified ethylene-based modifying polymer and the polyamide resin during melt blending will end up proceeding - causing the melt viscosity of the obtained thermoplastic elastomer composition to become remarkably higher and worsening the processability, so this is not preferable. If on the other hand, the content is high, the hydrophobic plasticizer will bleed out onto the surface of the thermoplastic elastomer composition and worsen handling, so this is not preferable.

As the modified ethylene-based modifying polymer (B) graft modified by an acid anhydride groups used in the present invention, it is preferable to use a soft polymer, for example, an ethylene-α-olefin copolymer graft modified by acid anhydride groups. Modified ethylene-based modifying polymers graft modified by acid anhydride groups are known. For example, they are commercially available as Mitsui Chemicals' anhydrous maleic acid modified ethylene propylene copolymer (Tafmer® MP-0620) and anhydrous maleic acid modified ethylene butene copolymer (Tafmer® MP-7020). The present invention may use these processed commercial goods.

The modified ethylene-based modifying polymer (B) is preferably cross-linked by a multifunctional amine having two or more amino groups in a molecule from the viewpoint of improvement of the shear rate. A multifunctional amine having two or more amino groups in a molecule includes diethylenetriamine (DTA), triethylenetetramine (TTA), m-xylylenediamine (m-XDA), meta-phenylenediamine (MPDA), diaminodiphenylmethane (DDM), and the like, however, among these, polyethyleneimine is preferable. The method of cross-linking by a multifunctional amine having two or more amino groups in a molecule is not particularly limited, however, it is preferable to melt blend the thermoplastic resin composition (A) and modified ethylene-based modifying polymer (B) at a temperatures not less than their melting temperatures, then dynamically cross-link the modified ethylene-based modifying polymer (B) by the multifunctional amine. "Dynamically cross-link" means cross-linking by adding a cross-linking agent to a composition containing what is to be cross-linked while applying shear stress. Specifically, by melt kneading the composition containing what is to be cross-linked and the cross-linking agent, it is possible to dynamically cross-link them.

In the thermoplastic elastomer composition of the present invention, the thermoplastic resin composition (A) forms a continuous phase and the modified ethylene-based modifying polymer (B) forms a dispersed particle phase. The content of the modified ethylene-based modifying polymer (B) in the thermoplastic elastomer composition is, based on 100 parts by weight of the thermoplastic resin composition, 70 to 120 parts by weight, preferably 75 to 100 parts by weight, and more preferably 80 to 100 parts by weight. If the content of the modified ethylene-based modifying polymer (B) in the thermoplastic elastomer composition is too low, the low temperature durability deteriorates, while when too high, the fluidity at melting will be extremely reduced and film formability will greatly worsen.

The thermoplastic elastomer composition of the present invention can be produced by melt blending in advance, for example, the layered silicate modified polyamide resin (A1) and the hydrophobic plasticizer (A2) at a temperature, for example, 20°C higher than the melting point of the polyamide resin, then melt blending it with the modified ethylene-based modifying polymer (B).

When cross-linking the modified ethylene-based modifying polymer (B), it is preferable to melt blend 100 parts by weight of the thermoplastic resin composition (A) comprising 60 to 90 percent by weight of the layered silicate modified aliphatic polyamide resin (A1) prepared by an interlayer polymerization method and 40 to 10 percent by weight of the hydrophobic plasticizer (A2) having a solubility parameter (SP value) of 10 to 12 $(cal/cm^2)^{1/2}$ and 70 to 120 parts by weight of the modified ethylene-based modifying polymer (B) graft modified by acid anhydride groups at a temperature not less than the melting temperatures of the thermoplastic resin composition (A) and the modified ethylene-based modifying polymer (B), and then dynamically cross-link the modified ethylene-based modifying polymer (B) by the multifunctional amine.

The thermoplastic elastomer composition according to the present invention may have various additives blended into it in addition to the above ingredients such as carbon black, silica, and other fillers, vulcanization or cross-linking agents, vulcanization or cross-linking accelerators, various types of oils, anti-aging agents, and other various types of additives generally blended in for rubber composition use. These additives may be kneaded by a general method to obtain compositions for use for vulcanization or cross-linking. The amounts of these additives blended may be made the conventional general amounts so long as not running counter to the object of the present invention.

The thermoplastic elastomer composition of the present invention can be made into film using a T-die extruder, an inflation machine, etc. The film is superior in gas barrier property, heat resistance, and bending fatigue resistance, so can be suitably used as the inner liner of a pneumatic tire.

Regarding the method of production of a pneumatic tire comprising a film composed of a thermoplastic elastomer composition according to the present invention as its inner liner, explaining one example in the case where the inner liner is arranged at the inner side of the carcass layer, the thermoplastic elastomer composition of the present invention is extruded in advance to a film shape having a specified width and thickness and is then attached cylindrically on a tire-forming drum. On top of it, a carcass layer, belt layer, tread layer, and other members comprised of unvulcanized rubber used in normal tire production are overlaid in that order, then the drum is pulled out to thereby obtain a green tire. Next, this green tire is vulcanized in accordance with an ordinary method to produce the desired pneumatic tire.

The thermoplastic elastomer composition of the present invention, in addition to pneumatic tires, be used as laminate material used as various types of plastic hoses or other rubber products relating to control of permeation of various types of gases (gas, air, etc.) and, for example, fenders, rubber bags, fuel tanks, etc.

EXAMPLES

(1) Main Ingredients

As polyamide resins, the following three types were used.

Polyamide resin 1: layered silicate modified aliphatic polyamide resin prepared by an interlayer polymerization method (nylon 6 "UBE Nylon" 1022C2 made by Ube Industries, Ltd.; layered silicate: sodium montmorillonite; layered silicate content: 2 percent by weight; melt viscosity -η: 387 Pa·s)
Polyamide resin 2: high viscosity nylon 6 (nylon 6 "UBE Nylon" 1022B made by Ube Industries, Ltd.; melt viscosity η: 254 Pa·s)
Polyamide resin 3: low viscosity nylon 6 (nylon 6 "UBE Nylon" 1013B made by Ube Industries, Ltd.; melt viscosity η: 113 Pa·s)
As the hydrophobic plasticizer, the following four types were used.
Hydrophobic plasticizer 1: n-butylbenzenesulfonamide (BM-4 made by Daihachi Chemical Industry Co., Ltd.; SP value: 10.5 $(cal/cm^2)^{1/2}$)
Hydrophobic plasticizer 2: tricresyl phosphate (TCP made by Daihachi Chemical Industry Co., Ltd.; SP value: 9. 6 $(cal/cm^2)^{1/2}$)
Hydrophobic plasticizer 3: bis(butyldiglycol)adipate (BXA made by Daihachi Chemical Industry Co., Ltd.; SP value: 9.5 $(cal/cm^2)^{1/2}$)
Hydrophobic plasticizer 4: diisodecyl phthalate (DIDP made by Daihachi Chemical Industry Co., Ltd.; SP value: 9.0 $(cal/cm^2)^{1/2}$)

As the modified ethylene-based modifying polymer graft modified by acid anhydride groups, anhydrous maleic acid modified ethylene propylene copolymer (Tafmer® MP-0620 made by Mitsui Chemicals, Inc.) was used.

As the cross-linking agent, polyethyleneimine (Epomin® SP-006 made by Nippon Shokubai Co., Ltd.) was used.

(2) Production of the thermoplastic elastomer composition

The polyamide resin and hydrophobic plasticizer were charged in the percent by weight shown in Table 1 into a twin screw kneader (TEX44 made by Japan Steel Works), then melt kneaded at the kneader temperature of 230°C to obtain a thermoplastic resin composition. Next, 100 parts by weight of the thermoplastic resin composition and the parts by weight of the modified ethylene-based modifying polymer indicated in Table 1 and, when applicable, the cross-linking agent were charged into the twin screw kneader and melt kneaded at a kneader temperature of 220°C, discharged continuously from the extruder, and the extrudate was cooled with water and then cut with a cutter to obtain pellet shaped thermoplastic elastomer composition.

(3) Production of thermoplastic elastomer composition film

The pellet shaped thermoplastic elastomer composition was formed into films having an average thickness of 150 $\mu$m using a 40 mm$\phi$ single-screw extruder equipped with a 550 mm wide T-die (made by Pla Giken Co., Ltd.) under extrusion conditions of extrusion temperatures Cl/C2/C3/C4/die = 200/210/23-0/235/235°C, a cooling roll temperature of 50°C, and a hall-off speed of 4 m/min.

(4) Preparation of test tire

Twenty (20) parts by weight of natural rubber (PT. NIJSIRA SIR20), 40 parts by weight of emulsion polymerized SBR (NIPOL 1502 made by Zeon Corporation), 40 parts by weight of halogenated butyl rubber (Exxon BromButyl 2255 made by ExxonMobil Chemical Company), 60 parts by weight of carbon black (Seast 9M made by Tokai Carbon Co., Ltd.), 15 parts by weight of aromatic oil (Desolex No. 3 made by Showa Shell Sekiyu K.K.), and 5 parts by weight of brominated phenol resin (Tackrol 250-1 made by Taoka Chemical Co., Ltd.) were kneaded for 5 minutes in a 16 liter internal mixer and taken out when reaching 140°C to obtain a master batch. Then 2 parts by weight of zinc oxide (Zinc Oxide No. 3 made by Seido Chemical Industry Co., Ltd.) and 1 part by weight of stearic acid (Beads Stearic Acid YR made by NOF Corporation) were kneaded into this master batch by an open roll to obtain a rubber composition. The rubber composition was calendered to width of 500 mm and a thickness of 300 $\mu$m to obtain an unvulcanized rubber composition sheet.

On one side of the thermoplastic elastomer composition film, the rubber composition sheet was laminated. This was made the inner liner of the tire. Next, a 195/65R15 passenger vehicle pneumatic tire in which the thermoplastic elastomer composition film of the laminate was arranged to be at the innermost surface was prepared by an ordinary method under conditions of a vulcanization temperature of 178°C and a vulcanization time of 12 minutes.

The various physical properties and performance were evaluated by the following methods.

[Melt viscosity]

The "melt viscosity" means the melt viscosity of the ingredient at any temperature during kneading. The melt viscosity of each polymer material has dependency on temperature, shear rate (sec$^{-1}$), and shear stress, so the stress and shear rate of polymer materials are measured at any temperature at a molten state normally flowing through a capillary, in particular, the kneading temperature region, and the melt viscosity is measured with the following formula:

$$\eta = \text{shear stress/shear rate}$$

In the present invention, the melt viscosity (Pa·s) of the thermoplastic elastomer composition is measured using a Capillary Rheometer Capiograph 1C made by Toyo Seiki Seisaku-sho, Ltd. at 250°C with a shear rate of 250 sec$^{-1}$. It is preferable for the melt viscosity to be no more than 1800 Pa·s from the viewpoint of film formability.

[Melt formability]

In the above "production of thermoplastic elastomer composition film", "good" indicates cases where film could be successfully produced and "poor" indicates cases when film could not be produced. The melt formability is a measure of the film formability.

[Average dispersed particle size of modified ethylene-based modifying polymer phase]

The thermoplastic elastomer composition was frozen at -100°C, a sample was cut by a microtome to produce a fresh facet, then this facet was observed by an atomic force microscope (SPA-300HV made by SII NanoTechnology Inc.) so as to measure the number average dispersed particle size ($\mu$m) of the modified ethylene-based modifying polymer phase.

[Constant strain fatigue test (average times to breakage)]

The thermoplastic elastomer composition was formed to a film-shape having a width of 200 mm and a thickness of 150 $\mu$m, attached to unvulcanized rubber having a thickness of 0.2 cm, then vulcanized at 180°C for 10 minutes. This is punched to a JIS No. 2 dumbbell shape which was given repeated deformation with a chuck distance of 50 mm, stroke of 20 mm, and frequency of 6.67Hz until the test piece broke. The number of repetitions until the test piece broke was measured and the average value of five measurements was made the average times to breakage.

[Tire durability test]

165SR13 steel radial tires were prepared, fitted to 13x4 1/2-J sized rims, given an air pressure of 200 kPa, mounted to a 1500 cc class passenger vehicle with a load equivalent to that of four people (65 kg per person), and the vehicle was driven on an actual road for 20,000 km. After driving, the tires were removed from the rims and the liner layers of the tire inner surfaces were visually observed. Tires with cracks or visible "wrinkles" in the inner liners, or peeling or blistering of the liner layers were judged to have failed and those without any of the above were judged to have passed.

[Tire air leakage value]

A tire was allowed to stand for three months under conditions of an initial pressure of 200 kPa, room temperature, and no load. The pressure was measured at measurement intervals of every four days. The following function

$$Pt/P0=\exp(-\alpha t)$$

was regressed to find the $\alpha$-value, where the measurement pressure is Pt, the initial pressure is P0, and number of elapsed days is t. The obtained $\alpha$ was used and t=30 was entered into the following equation

$$\beta=[1-\exp(-\alpha t)]\times 100$$

to obtain the $\beta$-value. This value was used as the rate of pressure drop per month (air leakage rate) (%/month).

Thermoplastic elastomer compositions, the thermoplastic elastomer composition films, and the test tires prepared as explained above were evaluated for physical properties and performance. The results are shown in Table 1.

Table 1

| | | Comp. Ex.1 | Comp. Ex.2 | Comp. Ex.3 | Comp. Ex.4 | Comp. Ex.5 | Comp. Ex.6 | Comp. Ex.7 | Comp. Ex.8 | Comp. Ex.9 | Comp. Ex.10 | Example 1 | Example 2 | Example 3 | Example 4 |
|---|---|---|---|---|---|---|---|---|---|---|---|---|---|---|---|
| Polyamide modified (percent by weight) | Layered silicate modified aliphatic polyamide resin | | | | | | 100 | 70 | 70 | 70 | | 90 | 80 | 70 | 70 |
| | High viscosity Nylon 6 | 100 | 90 | 80 | 70 | | | | | | | | | | |
| | Low viscosity nylon 6 | | | | | 70 | | | | | 70 | | | | |
| Hydro phobic plasticizer (percent by weight) | n-butylbenzene sulfonamide | | 10 | 20 | 30 | 30 | | | | | 30 | 10 | 20 | 30 | 30 |
| | Tricresyl phosphate | | | | | | | 30 | | | | | | | |
| | Bis(butyl diglycol)adipate | | | | | | | | 30 | | | | | | |
| | Diisodecyl phthalate | | | | | | | | | 30 | | | | | |
| Modified ethylene-based modifying polymer (parts by weight)a | Anhydrous maleic acid modified ethylene propylene copolymer | 80 | 80 | 80 | 80 | 38 | 80 | 80 | 80 | 80 | 94 | 80 | 80 | 80 | 93 |
| Cross-linking agent (parts by weight)* | Polyethyleneimine | | | | | | | | | | | | | | 1 |
| Melt viscosity (Pa·sl) | | 5506 | 4530 | 3980 | 3760 | 1145 | 5120 | 5250 | 5450 | 5360 | 1280 | 1650 | 1430 | 1105 | 1213 |
| Melt formability (film formability) | | Poor | Poor | Poor | Poor | Good | Poor | Poor | Poor | Poor | Good | Good | Good | Good | Good |
| Average dispersed particle diameter (μm) of modified ethylene-based modifying polymer | | 0.2 | 0.2 | 0.2 | 0.2 | 0.2 | 0.2 | 0.2 | 0.2 | 0.2 | 2.1 | 0.3 | 0.3 | 0.4 | 0.5 |
| Constant strain fatigue test (average breakage) | | - | - | - | - | 60,000 times | - | - | - | - | 70,000 times | 320.000 times | 480,000 times | 680,000 times | 1,000,000 times (completed run) |

8

(continued)

| | | Comp. Ex.1 | Comp. Ex.2 | Comp. Ex.3 | Comp. Ex.4 | Comp. Ex.5 | Comp. Ex.6 | Comp. Ex.7 | Comp. Ex.8 | Comp. Ex.9 | Comp. Ex.10 | Example 1 | Exemple 2 | Example 3 | Example 4 |
|---|---|---|---|---|---|---|---|---|---|---|---|---|---|---|---|
| Tire durability test | | - | - | - | - | Failed (many cracks) | - | - | - | - | Failed (32 cracks) | Passed | Passed | Passed | Passed |
| Tire air leakage value (%/month) | | - | - | - | - | 1.4 | - | - | - | - | 2.5 | 1.7 | 1.9 | 2.1 | 2.3 |
| Remarks: a) Parts by weight with respected to a combined total 100 parts by weight of polyamide resin and hydrophobic plasticizer | | | | | | | | | | | | | | | |

In the thermoplastic elastomer compositions of the present invention (Examples 1 to 4), the dispersion properties of the modified ethylene-based modifying polymer are not worsened, the melt viscosity can be reduced, and films can be formed. Films prepared from these thermoplastic elastomer compositions show extremely high average times to breakage in the constant strain fatigue tests. Pneumatic tires comprising these films as inner liners passed tire durability tests, were in tire leakage values, and had superior performance.

FIG. 1 shows the effect of the type and amount of hydrophobic plasticizer on the melt viscosity of the thermoplastic elastomer composition in a thermoplastic elastomer composition having 100 parts by weight of a thermoplastic resin composition comprising a polyamide resin and hydrophobic plasticizer and 80 parts by weight of a modified ethylene-based modifying polymer. From this figure, it is clear that the combination of a layered silicate modified aliphatic polyamide resin and a hydrophobic plasticizer having a solubility parameter (SP value) of 10 to 12 $(cal/cm^2)^{1/2}$ is effective in reducing the melt viscosity.

## Claims

1. A thermoplastic elastomer compositions comprising a thermoplastic resin composition (A) and a modified ethylene-based modifying polymer (B) graft modified with an acid anhydride group, wherein the thermoplastic resin composition (A) comprises 60 to 90 percent by weight of a layered silicate modified aliphatic polyamide resin (A1) prepared by an interlayer polymerization method and 10 to 40 percent by weight of a hydrophobic plasticizer (A2) having a solubility parameter (SP value) of 10 to 12 $(cal/cm^2)^{1/2}$, the modified ethylene-based modifying polymer (B) is included in an amount of 70 to 120 parts by weight based on 100 parts by weight of the thermoplastic resin composition, and the modified ethylene-based modifying polymer (B) forms a dispersed particle phase.

2. A thermoplastic elastomer composition as set forth in claim 1, wherein the hydrophobic plasticizer (A2) is a sulfonamide-based plasticizer.

3. A thermoplastic elastomer composition as set forth in claim 1 or 2, wherein the layered silicate is a sodium montmorillonite.

4. A thermoplastic elastomer composition as set forth in any one of claims 1 to 3, wherein the modified aliphatic polyamide resin (A1 is modified by 0.5 to 5 percent by weight of layered silicate.

5. A thermoplastic elastomer composition as set forth in any one of claims 1 to 4, wherein the aliphatic polyamide resin composing the modified aliphatic polyamide resin (A1) is at least one resin selected from the group consisting of nylon 6 and nylon 610, nylon 612, and nylon 6.66 or a mixture thereof.

6. A thermoplastic elastomer composition as set forth in any one of claims 1 to 5, wherein the modified ethylene-based modifying polymer (B) is cross-linked by a multifunctional amine having at least two or more amino groups in a molecule.

7. A thermoplastic elastomer composition as set forth in any one of claims 1 to 6, wherein the modified ethylene-based modifying polymer (B) is an ethylene-$\alpha$-olefin copolymer and/or ethylene-unsaturated carboxylic acid copolymer.

8. A method of production of a thermoplastic elastomer composition, comprising the steps of melt blending 100 parts by weight of a thermoplastic resin composition (A) comprising 60 to 90 percent by weight of a layered silicate modified aliphatic polyamide resin (A1) prepared by an interlayer polymerization method and 40 to 10 percent by weight of a hydrophobic plasticizer (A2) having a solubility parameter (SP value) of 10 to 12 $(cal/cm^2)^{1/2}$ and 70 to 120 parts by weight of a modified ethylene-based modifying polymer (B) graft modified by an acid anhydride group at a temperature not less than melting temperatures of the thermoplastic resin composition (A) and the modified ethylene-based modifying polymer (B), and then dynamically cross-linking the modified ethylene-based modifying polymer (B) by a multifunctional amine.

9. A pneumatic tire comprising.a film composed of a thermoplastic elastomer composition as set forth in any one of claims 1 to 7 as an inner liner.

**Patentansprüche**

1. Eine thermoplastische Elastomerzusammensetzung, umfassend eine thermoplastische Harzzusammensetzung (A) und ein modifiziertes Modifizierungspolymer auf Ethylenbasis (B), das mit einer Säureanhydridgruppe pfropfmodifiziert ist, wobei die thermoplastische Harzzusammensetzung (A) 60 bis 90 Gew.-% eines mit einem geschichteten Silikat modifizierten aliphatischen Polyamidharzes (A1), hergestellt durch ein Zwischenschichtpolymerisationsverfahren, und 10 bis 40 Gew.-% eines hydrophoben Weichmachers (A2) mit einem Löslichkeitsparameter (SP-Wert) von 10 bis 12 $(cal/cm^2)^{1/2}$ umfasst, das modifizierte Modifizierungspolymer auf Ethylenbasis (B) in einer Menge von 70 bis 120 Gewichtsteilen, bezogen auf 100 Gewichtsteile der thermoplastischen Harzzusammensetzung, enthalten ist und das modifizierte Modifizierungspolymer auf Ethylenbasis (B) eine dispergierte Teilchenphase bildet.

2. Eine thermoplastische Elastomerzusammensetzung nach Anspruch 1, wobei der hydrophobe Weichmacher (A2) ein Weichmacher auf Sulfonamidbasis ist.

3. Eine thermoplastische Elastomerzusammensetzung nach Anspruch 1 oder 2, wobei das geschichtete Silikat ein Natriummontmorillonit ist.

4. Eine thermoplastische Elastomerzusammensetzung nach einem der Ansprüche 1 bis 3, wobei das modifizierte aliphatische Polyamidharz (A1) mit 0,5 bis 5 Gew.-% geschichtetem Silikat modifiziert ist.

5. Eine thermoplastische Elastomerzusammensetzung nach einem der Ansprüche 1 bis 4, wobei das aliphatische Polyamidharz, aus dem das modifizierte aliphatische Polyamidharz (A1) besteht, mindestens ein aus der Gruppe bestehend aus Nylon 6 und Nylon 610, Nylon 612 und Nylon 6.66 ausgewähltes Harz oder ein Gemisch davon ist.

6. Eine thermoplastische Elastomerzusammensetzung nach einem der Ansprüche 1 bis 5, wobei das modifizierte Modifizierungspolymer auf Ethylenbasis (B) mit Hilfe eines multifunktionellen Amins mit mindestens zwei oder mehr Aminogruppen in einem Molekül vernetzt ist.

7. Eine thermoplastische Elastomerzusammensetzung nach einem der Ansprüche 1 bis 6, wobei das modifizierte Modifizierungspolymer auf Ethylenbasis (B) ein Ethylen-α-Olefin-Copolymer und/oder Ethylen-ungesättigte Carbonsäure-Copolymer ist.

8. Ein Verfahren zur Herstellung einer thermoplastischen Elastomerzusammensetzung, umfassend die Schritte des Schmelzmischens von 100 Gewichtsteilen einer thermoplastischen Harzzusammensetzung (A), die 60 bis 90 Gew.-% eines mit einem geschichteten Silikat modifizierten aliphatischen Polyamidharzes (A1), hergestellt durch ein Zwischenschichtpolymerisationsverfahren, und 40 bis 10 Gew.-% eines hydrophoben Weichmachers (A2) mit einem Löslichkeitsparameter (SP-Wert) von 10 bis 12 $(cal/cm^2)^{1/2}$ umfasst, und 70 bis 120 Gewichtsteilen eines modifizierten Modifizierungspolymers auf Ethylenbasis (B), das mit einer Säureanhydridgruppe pfropfmodifiziert ist, bei einer Temperatur von nicht weniger als den Schmelztemperaturen der thermoplastischen Harzzusammensetzung (A) und des modifizierten Modifizierungspolymers auf Ethylenbasis (B) und anschließend dynamisches Vernetzen des modifizierten Modifizierungspolymers auf Ethylenbasis (B) mit Hilfe eines multifunktionellen Amins.

9. Ein Luftreifen, umfassend einen aus einer thermoplastischen Elastomerzusammensetzung nach einem der Ansprüche 1 bis 7 bestehenden Film als Innenauskleidung.

**Revendications**

1. Composition élastomère thermoplastique comprenant une composition de résine thermoplastique (A) et un polymère modifié modifiant à base d'éthylène (B), modifié par greffage avec un groupe anhydride d'acide, dans laquelle la composition de résine thermoplastique (A) comprend de 60 à 90 % en poids d'une résine de polyamide aliphatique modifiée avec du silicate stratifié (A1) préparée par un procédé de polymérisation intercouche et de 10 à 40 % en poids d'un plastifiant hydrophobe (A2) possédant un paramètre de solubilité (valeur SP) de 10 à 12 $(cal/cm^2)^{1/2}$, le polymère modifié modifiant à base d'éthylène (B) étant inclus en une quantité de 70 à 120 parties en poids sur la base de 100 parties en poids de la composition de résine thermoplastique, et le polymère modifié modifiant à base d'éthylène (B) formant une phase de particules dispersées.

2. Composition élastomère thermoplastique selon la revendication 1, dans laquelle le plastifiant hydrophobe (A2) est un plastifiant à base de sulfonamide.

3. Composition élastomère thermoplastique selon la revendication 1 ou 2, dans laquelle le silicate stratifié est une montmorillonite de sodium.

4. Composition élastomère thermoplastique selon l'une quelconque des revendications 1 à 3, dans laquelle la résine de polyamide aliphatique modifiée (A1) est modifiée par 0,5 à 5 % en poids de silicate stratifié.

5. Composition élastomère thermoplastique selon l'une quelconque des revendications 1 à 4, dans laquelle la résine de polyamide aliphatique composant la résine de polyamide aliphatique modifiée (A1) est au moins une résine choisie dans le groupe constitué par le nylon 6 et le nylon 610, le nylon 612 et le nylon 6.66 ou un mélange de ceux-ci.

6. Composition élastomère thermoplastique selon l'une quelconque des revendications 1 à 5, dans laquelle le polymère modifié modifiant à base d'éthylène (B) est réticulé par une amine multifonctionnelle comprenant au moins deux groupes amino ou plus par molécule.

7. Composition élastomère thermoplastique selon l'une quelconque des revendications 1 à 6, dans laquelle le polymère modifié modifiant à base d'éthylène (B) est un copolymère d'éthylène-α-oléfine et/ou un copolymère d'éthylène-acide carboxylique insaturé.

8. Procédé de production d'une composition élastomère thermoplastique comprenant les étapes de mélange à l'état fondu de 100 parties en poids d'une composition de résine thermoplastique (A) comprenant de 60 à 90 % en poids d'une résine de polyamide aliphatique modifiée avec du silicate stratifié (A1) préparée par un procédé de polymérisation intercouche et de 40 à 10 % en poids d'un plastifiant hydrophobe (A2) possédant un paramètre de solubilité (valeur SP) de 10 à 12 $(cal/cm^2)^{1/2}$ et de 70 à 120 parties en poids d'un polymère modifié modifiant à base d'éthylène (B), modifié par greffage avec un groupe anhydride d'acide à une température non inférieure aux températures de fusion de la composition de résine thermoplastique (A) et du polymère modifié modifiant à base d'éthylène (B), puis de réticulation dynamique du polymère modifié modifiant à base d'éthylène (B) par une amine multifonctionnelle.

9. Bandage pneumatique comprenant un film composé d'une composition élastomère thermoplastique selon l'une quelconque des revendications 1 à 7, en tant que revêtement interne.

# Fig.1

● NYLON 6/n-BUTYLBENZENESULFONAMIDE

○ LAYERED SILICATE MODIFIED ALIPHATIC
POLYAMIDE RESIN/n-BUTYLBENZENESULFONAMIDE

△ LAYERED SILICATE MODIFIED ALIPHATIC
POLYAMIDE RESIN/BIS(BUTYLDIGLYCOL) ADIPATE

□ LAYERED SILICATE MODIFIED ALIPHATIC
POLYAMIDE RESIN/TRICRESYL PHOSPHATE

HYDROPHOBIC PLASTICIZER IN THERMOPLASTIC RESIN
(PERCENT BY WEIGHT)

**EP 2 154 202 B1**

## REFERENCES CITED IN THE DESCRIPTION

### Patent documents cited in the description

- JP 8259741 A
- JP 10025375 A
- JP 10114840 A
- JP 2000160024 A